Europäisches Patentamt

(19) European Patent Office

Office européen des brevets

(11) Publication number: **0 066 170**
**B1**

(12) EUROPEAN PATENT SPECIFICATION

(45) Date of publication of patent specification: **05.03.86**

(21) Application number: **82104310.6**

(22) Date of filing: **17.05.82**

(51) Int. Cl.⁴: **A 23 B 4/02, A 23 B 4/12,**
**A 23 L 3/34, A 23 C 19/10**

(54) A method for inhibiting the production of enterotoxin from clostridium botulinum in corned beef, cheese and carbohydrate food products.

(30) Priority: **18.05.81 US 264903**
**06.07.81 US 280188**
**06.07.81 US 280192**

(43) Date of publication of application:
**08.12.82 Bulletin 82/49**

(45) Publication of the grant of the patent:
**05.03.86 Bulletin 86/10**

(84) Designated Contracting States:
**AT BE CH DE FR GB IT LI LU NL SE**

(56) References cited:
**EP-A-0 037 887**
**AU-B- 413 702**
**FR-A-1 090 928**
**FR-A-2 345 082**
**GB-A-2 029 192**
**NL-C- 31 223**
**US-A-4 277 507**
**US-A-4 282 260**

**Chemische Lebensmittelkonservierung,**
**(E.LÜCK), pages 85-88**
**The technology of food presentation (W.W.**
**DESROSIER), pages 359-360**

(73) Proprietor: **FMC Corporation**
**2000 Market Street**
**Philadelphia Pennsylvania 19103 (US)**

(72) Inventor: **Thompson, John Seymour**
**350 Conestoga Road**
**Wayne Pennsylvania 19087 (US)**
Inventor: **Jadlocki, Joseph Francis, Jr.**
**8 Gloucester Court**
**Mount Holly New Jersey 08060 (US)**

(74) Representative: **Zumstein, Fritz jun., Dr. et al**
**Dr. F. Zumstein sen. Dr. E. Assmann Dr. R.**
**Koenigsberger Dipl.-Ing. F. Klingseisen Dr. F.**
**Zumstein jun. Bräuhausstrasse 4**
**D-8000 München 2 (DE)**

Courier Press, Leamington Spa, England.

## Description

It has long been standard practice to add sodium nitrite to preserve meat products such as ham, bacon, and other meats, for example, frankfurters, bologna, Thuringer sausages and salami. The sodium nitrite is added to inhibit the growth of *Clostridium botulinum* and the production of enterotoxin in the communited meat products during storage. The addition of sodium nitrite also maintains a pleasing pink color in the meat.

The presence of sodium nitrite as a food additive, and particularly the presence of sodium nitrite in bacon and other smoked meats that are cooked at high temperatures, has become of increasing concern with the knowledge that sodium nitrite can combine with secondary and tertiary amines in cooked meats (particularly bacon) to form nitrosamines. Many nitrosamines have been shown to be carcinogens in animals, and the nitrosamine that is commonly found in fried bacon, nitrosopyrrolidine, is a known carcinogen.

It is quite obvious that reducing the nitrites present in meat products is a desirable goal, but it is also necessary to prevent the production of deadly botulinal toxin that may occur on storage. Because of the widespread concern with the use, toxicity and necessity of nitrite addition in food products this problem has received increasing attention. FR—A—2 345 082 reduces the amount of sodium nitrite by substituting for a part of it large amounts of sorbic acid and its salts. This combination of additives has the disadvantage that some persons of the population have developed allergic reactions after eating nitrite/sorbate-smoked products.

Another approach to solving the N-nitrosamine problem is the addition of materials to suppress N-nitrosamine formation. A cooperative American Meat Institute study which involved eight firms using their commercial production techniques, indicated that in commercial production, α-tocopherol in combination with sodium erythorbate (isoascorbate) or sodium ascorbate did suppress N-nitrosamine formation. Dispersion of the α-tocopherol in the pickle was occasionally a problem, and a surface active agent was mixed with the α-tocopherol to improve dispersion. The lowest level of nitrosopyrrolidine (0.4 to 2 parts per million) was obtained with 120 parts per million nitrite, 550 parts per million erythorbate or ascorbate and 550 parts per million α-tocopherol.

Since June 15, 1978 the United States Department of Agriculture has required that all bacon produced using nitrite must employ 120 parts per million of sodium nitrite (or 148 parts per million of potassium nitrite) to prevent formation of botulinal toxin and 550 parts per million sodium ascorbate or sodium erythorbate to inhibit formation of nitrosamines.

More recently, the United States Department of Agriculture has approved a bacon process using a blend of microorganisms (Lactobacilli) that is incorporated in the curing pickle to promote production of lactic acid and reduce potential nitrosamine formation. During smoking, the culture reduces the pH of the meat which, in turn, reduces the residual nitrite content in the final product. Both factors, lower pH and reduced residual nitrite content, reduce subsequent nitrosamine formation at the time of frying. The current levels of 120 parts per million sodium nitrite and 550 parts per million sodium erythorbate (isoascorbate) are still employed in the process.

Sodium nitrite, or in rare occasions nitrate which is converted to nitrite, is also used to preserve color and to prevent bacterial spoilage and outgrowth of the enterotoxin of *Clostridium botulinum* in corned beef and in smoked whole poultry, poultry breasts, poultry rolls, poultry "ham", and other cured and smoked poultry products.

The increasing concern over the knowledge that sodium nitrite can combine with secondary and tertiary amines to form carcinogenic nitrosamines combined with the knowledge, as described in EP 81 101 227.7 (EP—A—0037 887), that nitrites can be replaced by hypophosphorous acid or its salts to prevent formation of both the *Clostridium botulinum* enterotoxin and nitrosamines recommends the use of hypophosphorous acid and its nontoxic water-soluble salts in corned beef.

Nitrates, which are converted to nitrites in the cheese to which they are added, have been used to make certain types of cheese in Europe since 1830. These types are typically Gouda, Edam, and many other Danish and West European types. The primary reason for the addition of nitrate to these cheeses is to prevent clostridial and coliform blowing.

Regulations or accepted limits in certain European countries often limit the actual amount of nitrate added to cheese milk to 20 grams of potassium nitrate or sodium nitrate per 100 liters of cheese milk. In practice, the amounts vary from 5 to 20 grams per 100 liters of milk (50—200 ppm). Some countries have regulations that limit the amount of nitrate that may be present in cheese when it is consumed. These limits vary from 40 up to 60 milligrams of nitrate per kilogram of cheese (40 to 60 ppm). Cheese that is sold for consumption will generally contain no more than 50 parts per million of a nitrate salt and not more than 5 parts per million of an nitrite salt.

Nitrite salts such as sodium and potassium nitrate are added during the preparation of Gouda and Edam cheese as mentioned above and in the manufacture of other types of cheese that have properties in common which make them very sensitive to blowing by *Clostridia* and coliform bacteria. Those cheese types that are quite sensitive to blowing have a relatively high pH, a relatively high water content, and require a long time to ripen at a relatively high temperature.

One property that is characteristic of those cheeses which may be benefited by the additives of the present invention is that such cheeses are salted from the outside (brined) after pressing the cheese. That is, the curd is not salted. Under these conditions of high water content and low salt content, *Clostridia* spores, especially those of *Clostridium tyrobutyricum* and *Clostridium perfringens* which are present in the interior of the cheese, can germinate and "grow out". Once germinated and grown out, the bacteria can withstand a salt concentration higher than required to prevent the germination of the spores originally present.

The germinating spores are particularly susceptible to the addition of nitrate, and are most probably killed by the nitrite that is produced from the nitrate, under the influence of the milk enzyme xanthine oxidase. It is believed that the process which prevents germination and the development of *Clostridia* is the combined action of nitrite that is produced from the added nitrate and by the slowly penetrating salt. It is not possible to use nitrite instead of nitrate because nitrite in cheese is not stable—so the initial concentration of nitrite that would be required to be effective would need to be so high as to inhibit the required lactic acid fermentation.

No suitable substitute for the use of a nitrate in the manufacture of cheese has been found. Thus, at the time the present invention was made, the addition of nitrate to cheese milk was indispensible in the making of brined cheeses.

This practice of adding nitrate to the cheese milk has been questioned on the ground that it may constitute a health hazard to the cheese consumer. The probability that the nitrate is added to cheese is reduced to form nitrite which may react with other constituents in the cheese to form nitrosamines is considered to be a risk factor. Moreover, experiments conducted by the United States Food and Drug Administration have shown that when *Clostridium botulinum* spores are added (injected into) a sealed package of process cheese, outgrowth of the enterotoxin was detected. Possibly because of the salt, and phosphate content of process cheese, outgrowth from spores that may be incorporated during mixing and pasteurizing has been considered to have a low probability. However, death from botulism has occurred in the United States following the ingestion of process cheese. Thus, the use of an additive for process cheese that would provide a margin of safety to cover insufficient mixing, inadequate pasteurizing, or too high a temperature during storage conditions may be required in the future.

Throughout the specification and claims the term "carbohydrate food products" will define a food characterized by a high carbohydrate content and a low protein and fat content such that the ratio of carbohydrate to protein and fat (C/P&F) is greater than 1. Meat, fish and poultry products are characterized by a low ratio of carbohydrate to protein and fat, that is, C/P&F is less than 1.

At least 188 cases of infant botulism have been identified in the United States between 1975 and 1980. Products investigated for the presence of spores included dry cereals, commercially canned fruits, commercially canned fruit juice, fresh cooked carrots, honey, corn syrup, dry commercial baby formula, regular cows milk, nonfat milk and sugar.

The original survey found 8 of 40 samples of corn syrups positive for *Clostridium botulinum* spores. A more recent survey found that 6 of 961 samples of corn syrups contained *Clostridium botulinum* spores. The preliminary data indicated that corn syrup could be a possible source of *Clostridium botulinum* spores.

The present invention is concerned with a method of inhibiting the production of enterotoxin from *Clostridium botulinum* in corned beef, cheese and carbohydrate food products whose ratio of carbohydrate to protein and fat is greater than 1, and upon cooking inhibiting formation of nitrosamines from any nitrite salt in such product, characterized by the step of adding thereto from 300 ppm to 3000 ppm of a compound selected from hypophosphorous acid and its nontoxic water-soluble salts and optionally containing up to 52 ppm of sodium nitrite.

From US—A—1 911 009 and NL-C-31 223 treatments of meats with hypophosphorous or phosphorous acid or salts of these acids were already known. However, these treatments were effected in order to accelerate the pickling whereby the addition of hypophosphorous or phosphorous acid or salts of these acids was carried out to a pickling salt mixture containing potassium nitrate. This prior art does not indicate how to inhibit both the production of enterotoxin from Clostridium botulinum and the formation of nitrosamines upon cooking in corned beef, cheese and carbohydrate food products. The same also applies to FR—A—1 090 928 which is connected with the improvement of the properties of animal or vegetable albumen by the use of several phosphorous compounds. "Chemische Lebensmittelkonservierung" (E. Lück, pages 85 to 88) and the "Technology of Food Preservation" (N. W. Desrosier, pages 359/360) disclose methods of food preservation and problems involved herewith.

The amount of hypophosphite salt (or hypophosphorous acid) that is added according to the invention may vary with the carbohydrate food, which for instance may be honey or corn syrup, the particular hypophosphite salt and the presence or absence of sodium nitrite; and is effective in amounts of from about 500 to about 3000 parts per million. About 3000 parts per million of a hypophosphite salt is sufficient to inhibit or block the formation of enterotoxins from *Clostridium botulinum* if there is no nitrite in the carbohydrate product. One thousand parts per million of sodium hypophosphite is effective when as little as 40 parts per million of sodium nitrite is also present in the carbohydrate food product. As indicated above, the potassium and calcium or magnesium or manganese hypophosphite salts may be employed in similar amounts with good results. The choice of a particular hypophosphite salt will depend upon its cost and relative effectiveness, and the amount of hypophosphite salt may be reduced if sodium nitrite is also present in amounts between about 40 ppm and 52 ppm. Particularly preferred are carbohydrate food products containing from 2000 to about 3000 ppm of hypophosphorous acid or its nontoxic water-soluble salts. The combination of 40 ppm sodium nitrite with 1000 ppm of sodium hypophosphite is also highly effective.

In the practice of the present invention, the hypophosphorous acid (or its nontoxic salt) may be added to the carbohydrate food product in solution or solid form. The present invention has particular application to the processing of baby foods and infant formulas wherein the hazards of botulism are believed to be particularly great due to the small body weight of the baby and the lack of flora in the lower gut. Examples of such carbohydrate food products having a C/P&F fat ratio of more than 1 are listed in Table I. The addition of an effective amount, that is, about 1000 to about 3000 ppm of hypophosphorous acid or one of its nontoxic salts to such carbohydrate food products will inhibit the growth of *Clostridium botulinum* and the formation of exterotoxins.

In accordance with the present invention, the growth of various *Clostridia* and/or coliform bacteria and the production of botulinal toxin is inhibited during storage of corned beef, carbohydrates and natural or process cheese by addition thereto of the indicated amount of a compound selected from the group consisting of hypophosphorous acid and its nontoxic water-soluble salts. Suitable salts of hypophosphorous acid that are useful as additives in the present invention are sodium hypophosphite, potassium hypophosphite, calcium hypophosphite, manganese hypophosphite and magnesium hypophosphite. Sodium hypophosphite is conveniently used in the form of its monohydrate, $NaH_2PO_2 \cdot H_2O$.

When hypophosphorous acid or its nontoxic water-soluble salts are present in corned beef in effective quantities, the amount (120 to 156 ppm) of sodium nitrite that is customarily added to such products may be reduced to one-third of that amount or eliminated entirely. Therefore, according to a preferred embodiment of the invention 1000 to 3000 ppm of hypophosphorous acid or its nontoxic water-soluble salts and 40 to 52 ppm of sodium nitrite is also added to the corned beef. The addition of hypophosphorous acid and/or a nontoxic water-soluble salt of hypophosphorous acid is believed to suppress or block the formation of N-nitrosamines upon cooking corned beef products containing sodium nitrite.

The amount of hypophosphite salt (or hypophosphorous acid) that is added may vary with the corned beef product, the particular salt and the presence or absence of sodium nitrite; and desirably is about 1000—3000 parts per million. It is preferred that about 3000 parts per million of hypophosphite salt be added if all sodium nitrite is eliminated from the comminuted corned beef product. About 1000 parts per million or less of sodium hypophosphite is effective when 40 parts per million of sodium nitrite is also present in the corned beef composition. As indicated above, the potassium and calcium or magnesium or manganese hypophosphite salts may be employed in similar amounts with good results. The choice of a particular hypophosphite salt will depend upon its cost and relative effectiveness.

In the practice of the present invention, the hypophosphorous acid, or its nontoxic water-soluble salts, may be added to corned beef in solution or solid form.

The amount of hypophosphite salt (or hypophosphorous acid) that is added may vary with the cheese product which may be a natural or processed cheese and the particular processing steps and is desirably from about 300—3,000 parts per million. It is preferred, if no nitrite or nitrate salts have been added to the cheese, that the hypophosphorous acid or its salt be present within the range of about 500 to 2,000 parts per million. As indicated above, any water soluble salt of hypophosphorous acid may be employed in similar amounts with good results. The choice and amount of a particular hypophosphite salt, or the free acid will depend upon its cost and relative effectiveness. The hypophosphorous acid (or its salt) may be conveniently added to the cheese milk at the time that the cheese starter is added.

The present invention is further illustrated by the following examples. Temperatures are in degrees centigrade and quantities are expressed in parts by weight and parts per million (ppm) unless otherwise indicated.

Example 1
Corned beef

Corned beef is cut into sections 7.5 cm thick and placed in a pickle of the following composition maintained at 6°C:

| | |
|---|---|
| Sodium chloride | 37 kg |
| Sucrose | 5 kg |
| Sodium tripolyphosphate | 3 kg |
| Sodium erythorbate | 400 g |
| Sodium Nitrite | 40 g |
| Sodium hypophosphite | 1 kg |
| Spices (Allspice & Laurel) | 300 g |
| Water | 53.26 kg |

After two weeks the meat sections are removed from the pickle solution and packaged with a small amount of pickle in sealed, water-tight plastic bags. The packaged corned beef contains about 1000 ppm of sodium hypophosphite and about 40 ppm of sodium nitrite.

Example 2

Corned beef may be prepared as described above in Example 1 by substituting for the pickle solution a pickle having the following composition:

| | |
|---|---|
| Sodium chloride | 37 kg |
| Sucrose | 5 kg |
| Sodium tripolyphosphate | 3 kg |
| Sodium erythorbate | 400 g |
| Sodium hypophosphite | 3 kg |
| Spices (Allspice & Laurel) | 300 g |
| Water | 51.3 kg |

The packaged corned beef contains about 3000 ppm of sodium hypophosphite and no sodium nitrite.

Example 3

Edam cheese

Five hundred kilograms of whole milk containing 3% butterfat is pasteurized by heating at 72°C for 16 seconds and then cooling to 30°C. The warm milk is pumped into a standard rectangular-shaped, jacketed vessel and 75 ml of annatto cheese color and 2.5 kg of an active lactic cheese starter are added with stirring. To the milk is then added with additional agitation 140 ml of single strength rennet (1:15,000) diluted with 5.5 liters of water. Finally, 500 g of sodium hypophosphite (1,000 ppm, based on whole milk) is added and the milk is stirred for 3 minutes longer. The vessel is then covered and allowed to stand for 15 minutes to allow the curd to form.

The curd is cut into 1.5 cm cubes and permitted to remain undisturbed for 5 minutes. The curd cubes are then cooked in whey, using steam in the jacket of the vessel to heat the whey to a temperature of 35°C. This cooking takes place over a 15 minutes period with steady agitation, during which time the temperature of the whey increases from room temperature at a rate of 0.8°C per minute to the final temperature of 35°C. When the temperature of the whey reaches the 35°C, the curds are stirred for 30 minutes during which time the curds become more firm (but not rubbery). The exit gate from the vessel is then opened and the whey is drained off until the level of the whey is just above the level of the bed of curds.

The warm curds are rapidly ladled into metal molds that are sized to contain 2.5 kg and lined with cheese cloth. The molds are preheated with warm water so that the temperature remains above 30°C to speed separation of the whey from the curds in the mold. Heavy lids are placed in position on the mold and allowed to press down on the curd and force out the whey, followed by placing the molds under light pressure for 30 minutes to compact the curd. Finally, balls of curd are removed from the mold and washed in sweet whey at 21°C. The balls of curd are wrapped in 15 cm wide cheese cloths, replaced in the molds, and pressed for 10 hours at 0.5 kilogram per square centimeter.

Concave wheels of cheese formed in this manner are removed from the mold and cloths and immersed in a saturated aqueous brine solution (23% sodium chloride) at 10°C for 10 days. During this time, the wheels of cheese are turned daily and sprinkled with coarse salt on their surfaces.

After 10 days the cheese wheels are removed from the brine, washed and dried. The cheese wheels are then placed on wooden shelves in a room at 15°C and 90% relative humidity. Each wheel is turned and lightly rubbed with salt daily for 2 weeks and twice daily for 3 additional weeks. After this 5 week curing period, the cheeses are waxed and allowed to ripen for 4 months at 15°C.

Similar results are obtained when 2,000 parts per million of hypophosphorous acid is substituted for 1,000 part per million of sodium hypophosphite.

Example 4

Gouda cheese

Five hundred kilograms of whole milk containing 3% butterfat is pasteurized and placed in a jacketed vessel with 75 ml of annatto cheese color and 2.5 kg of an active lactic cheese starter as described above in Example 3. To the milk is then added, with agitation, 140 ml of single strength rennet (1:15,000) that has been diluted with 5.5 liters of water. Then, 1000 g of sodium hypophosphite (2,000 rpm, based on whole milk) is added with stirring for 3 minutes longer, and the vessel is covered and allowed to stand for 15 minutes to permit the curd to form.

The curd is cut into 0.3 cm diameter grains and permitted to remain undisturbed for 5 minutes. The curd cubes are cooked in whey using steam in the vessel jacket to heat the whey to a temperature of 35°C. This cooking takes place over a 15 minute period at which time the temperature of whey increases at a rate of 0.8°C from room temperature to the final temperature of 35°C. The whey is drained from the vessel through an exit gate until the level of the whey is just above the level of the bed of curds. The warm curds are then ladled into metal molds sized to contain 5.5 kg, lined with cheese cloth and previously warmed in hot water. The molds are filled as rapidly as possible to prevent cooling and keep the temperature above 30°C.

Heavy lids are placed on the molds and allowed to press down on the curds forcing out the whey. The molds of whey are then placed under a light pressure for 30 minutes, removed from the mold and washed in sweet whey at 21°C. The curd balls are then rewrapped in 15 cm wide cheese cloths, replaced in the molds and pressed for 10 hours at 0.7 kilogram per square centimeter.

Flat wheels of cheese are removed from the molds and cloths and immersed in aqeous saturated brine solution (23% NaCl) at 10°C for 2 days. After 2 days, the wheels are removed from the brine solution placed on a shelf and washed with a wet cloth, while turning daily over a period of 5 weeks. The cheese is then coated with an orange wax and ripened for 3 months at 15°C.

Similar results are obtained when 2,000 parts per million of potassion hypophosphite, calcium hypophosphite, magnesium hypophosphite or manganese hypophosphite are substituted for the 1,000 parts per million of sodium hypophosphite.

Example 5
Chedder type process cheese foods

To a steam jacketed mixing kettle provided with a motor driven agitator and previously heated to 30°C is added 275 kg of chedder cheese, 50 kg of cheese whey solids, 32.5 kg of skim milk solids, and 75 kg water. This mixture is agitated for 10 minutes and 17.5 kg of cream (80% butterfat), 7.5 kg of salt, 10 kg of disodium orthophosphate-duo-hydrate, 0.5 kg of sodium hypophosphite (1,000 ppm) and 0.5 kg of paprika coloring are added. Mixing and heating are continued until the contents of the kettle reaches 60°C. Steam, at 1.0 kg per square centimeter is then injected directly into the kettle at a rate to bring the temperature of the cheese up to 75°C and maintained that temperature at 75°C for 3 minutes. The steam condensate from this heating step amounts to 32 kg of water. At this point, the emulsified mass is a smooth, velvet-appearing, homogeneous product. The contents of the kettle are emptied immediately into molds and permitted to cool to room temperature. The process cheese food is removed from the molds and wrapped for distribution.

If desired, 2,000 parts per million of hypophosphorous acid or a different non-toxic water soluble salt of hypophosphoric acid may be substituted for the 1,000 parts per million of sodium hypophosphite.

Example 6

To 99.8 kg of light corn syrup is added with stirring 200 g (2000 ppm) of sodium hypophosphite. The mixture is heated to the boiling point and bottled hot in glass jars.

Example 7

To 99.95 kg of an aqueous sucrose solution (70° Brix) is added with stirring 50 g (500 ppm) of sodium hypophosphite. The mixture is heated to the boiling point and bottled hot.

Example 8

To 99.7 kg of strained clover honey is added with stirring 300 g (3000 ppm) of sodium hypophosphite. The mixture was heated to 115.5°C for 3 minutes and bottled hot.

Example 9

A dry rice cereal may be prepared by mixing thoroughly the following ingredients:

| | |
|---|---|
| Banana Puree | 33 kg |
| Rice Flour | 25 kg |
| Sucrose | 20 kg |
| Soya Protein Concentrate | 10 kg |
| Dextrose | 8 kg |
| Soya Oil | 1.7 kg |
| Calcium Carbonate | 1.0 kg |
| Soya Lecithin | 400 g |
| Sodium Hypophosphite | 300 g |
| Electrolytic Iron | 30 g |
| Niacinamide | 30 g |
| Riboflavin | 20 g |
| Thiamin | 20 g |

The product is packged in cardboard boxes and protected from atmospheric moisture with a sealed paraffin coated paper barrier.

Example 10

A peach cobbler may be prepared by stirring together the following ingredients:

| | |
|---|---|
| Peaches | 45 kg |
| Water | 25 kg |
| Sugar | 20 kg |
| Corn Starch | 5 kg |
| Wheat Flour | 2.7 kg |
| Ascorbic Acid | 1.0 kg |
| Cinnamon Extract | 700 g |
| Citric Acid | 550 g |
| Sodium Hypophosphite | 50 g |

The mixture is heated to the boiling point and maintained at this temperature for 5 minutes. This product is packaged in glass jars while hot and the closed jars are heated to 115.5°C in an autoclave and maintained at that temperature for 3 minutes.

Example 11

A vanilla custard pudding may be prepared by stirring together the following ingredients:

| | |
|---|---|
| Water | 40 kg |
| Milk | 30 kg |
| Sugar | 20 kg |
| Corn Starch | 6.5 kg |
| Egg Yolks | 2.0 kg |
| Vanilla | 1.1 kg |
| Sodium Hypophosphite | 300 g |

The mixture is heated at 61.2—62.5°C for 30 minutes and packaged in glass jars.

Example 12

A milk-free concentrate formula may be prepared by emulsifying the following ingredients:

| | |
|---|---|
| Water | 75 kg |
| Sugar | 11 kg |
| Soya Oil | 6.5 kg |
| Soya Protein | 5 kg |
| Tapioca Dextrin | 1.5 kg |
| Disodium Phosphate | 300 g |
| Potassium Chloride | 300 g |
| Sodium Hypophosphite | 200 g |
| 1-methionine | |
| Dimagnesium Phosphate | |
| Choline Chloride | |
| Ferrous Sulfate | |
| Inositol | |
| Zinc Sulfate | |
| Vitamin A Palmitate | 200 g |
| Cupric Sulfate | |
| Manganese Sulfate | |
| Thiamin Hydrochlorite | |
| Riboflavin | |
| Folic Acid | |

This product is packaged in cans, heated to 115.5°C in an autoclave and maintained at that temperature for 3 minutes.

Example 13

Green beans may be prepared by cooking in a pressure cooker:

| | |
|---|---|
| Beans | 90 kg |
| Water | 8.8 kg |
| Salt | 760 g |
| Sodium Hypophosphite | 300 g |
| Sodium Nitrite | 40 g |

The product is canned, heated to 115.5°C in an autoclave and maintained at that temperature for 5 minutes.

Example 14

Whole kernel corn may be prepared by cooking in a pressure cooker:

| | |
|---|---|
| Whole Kernel Corn | 88 kg |
| Water | 9.4 kg |
| Sugar | 1.7 kg |
| Salt | 600 g |
| Sodium Hypophosphite | 300 g |

The product is canned, heated to 115.5°C in an autoclave and maintained at that temperature for 5 minutes.

Example 15

Mashed carrots may be prepared by cooking in a pressure cooker:

| | |
|---|---|
| Carrots | 90 kg |
| Water | 8 kg |
| Sugar | 1.4 kg |
| Salt | 500 g |
| Sodium Hypophosphite | 100 g |

The product is canned, heated to 115.5°C in an autoclave and maintained at that temperature for 5 minutes.

**0 066 170**

TABLE I
Baby foods

| | Protein[1] | Fat[2] | Carbo-hydrate[3] | C/P&F[4] |
|---|---|---|---|---|
| Cereals, precooked, dry other cereal products: | | | | |
| Barley, added nutrients | 13.4 | 1.2 | 73.6 | 5.0 |
| High protein, added nutrients | 35.2 | 3.7 | 48.1 | 1.2 |
| Mixed, added nutrients | 15.2 | 2.9 | 70.6 | 3.9 |
| Oatmeal, added nutrients | 16.5 | 5.5 | 66.0 | 3.0 |
| Rice, added nutrients | 6.6 | 1.6 | 80.0 | 9.8 |
| Teething biscuit | 11.1 | 2.3 | 78.0 | 5.8 |
| Desserts, canned: | | | | |
| Custard pudding, all flavors | 2.3 | 1.8 | 18.6 | 4.5 |
| Fruit pudding with starch base, milk and/or egg (banana, orange, or pineapple) | 1.2 | .9 | 21.6 | 10.3 |
| Fruits and Fruit products with or without thickening, canned: | | | | |
| Applesauce | .2 | .2 | 18.6 | 46.5 |
| Applesauce and apricots | .3 | .1 | 22.6 | 56.5 |
| Bananas (with tapioca or cornstarch, added ascorbic acid), strained | .3 | .2 | 21.6 | 36.0 |
| Bananas and pineapple (with tapioca or cornstarch) | .4 | .1 | 20.7 | 41.4 |
| Fruit dessert with tapioca (apricot, pineapple, and/or orange) | .3 | .3 | 21.5 | 35.8 |
| Peaches | .6 | .2 | 20.7 | 25.9 |
| Pears | .3 | .1 | 17.1 | 42.7 |
| Pears and pineapple | .4 | .2 | 17.6 | 29.3 |
| Plums with tapioca, strained | .4 | .2 | 24.3 | 40.5 |
| Prunes with tapioca | .3 | .2 | 22.4 | 44.8 |
| Vegetables, canned: | | | | |
| Beans, green | 1.4 | .1 | 5.1 | 3.1 |
| Beets, strained | 1.4 | .1 | 8.3 | 5.5 |
| Carrots | .7 | .1 | 6.8 | 8.5 |
| Mixed vegetables including vegetable soup | 1.6 | .3 | 8.5 | 4.5 |
| Peas, strained | 4.2 | .2 | 9.3 | 2.1 |

8

TABLE I (contd.)

|  | Protein[1] | Fat[2] | Carbo-hydrate[3] | C/P&F[4] |
|---|---|---|---|---|
| Vegetables, canned: | | | | |
| Spinach, creamed | 2.3 | .7 | 7.5 | 2.5 |
| Sqaush | .7 | .1 | 6.2 | 7.7 |
| Sweet potatoes | 1.0 | .2 | 15.5 | 51.7 |
| Tomato soup, strained | 1.9 | .1 | 13.5 | 6.7 |

[1] The weight of protein (grams) in a 100 gram sample.
[2] The weight of fat (grams) in a 100 gram sample.
[3] The weight of carbohydrate (grams) in a 100 gram sample.
[4] The weight of carbohydate in a 100 gram sample divided by the weight of protein plus the weight of fat in that sample.

## Claims

1. A method of inhibiting the production of enterotoxin from *Clostridium botulinum* in corned beef, cheese and carbohydrate food products in which the ratio of carbohydrate to protein and fat is greater than 1, and upon cooking inhibiting formation of nitrosamines from any nitrite salt in such product, characterized by the step of adding thereto from 300 ppm to 3000 ppm of a compound selected from hypophosphorous acid and its nontoxic water-soluble salts and optionally containing up to 52 ppm of sodium nitrite.

2. The method of claim 1 wherein said compound is selected from hypophosphorous acid and sodium hypophosphite.

3. The method of claim 1 or 2 characterized in that 1000 to 3000 ppm of hypophosphorous acid or its non-toxic water-soluble salts and 40 to 52 ppm of sodium nitrite is also added to the corned beef.

4. The method of claim 1 wherein said carbohydrate food is honey or corn syrup.

5. The method of claim 1 wherein said cheese is natural or processed cheese.

6. The method of any of claims 1, 3, 4 or 5 characterized in that the compound is selected from hypophosphorous acid, sodium hypophosphite, potassium hypophosphite, calcium hypophosphite, magnesium hypophosphite and manganese hypophosphite.

## Patentansprüche

1. Verfahren zum Hemmen der Bildung von Enterotoxin aus *Clostridium botulinum* in Corned Beef, Käse und kohlehydrathaltigen Nahrungsmittelprodukten, in welchen das Verhältnis von Kohlehydrat zu Protein und Fett größer als 1 ist, und zum Hemmen der Bildung von Nitrosaminen aus einem beliebigen Nitritsalz in einem derartigen Produkt beim Kochen, gekennzeichnet durch den Schritt des Zusetzens von 300 ppm bis 3000 ppm einer Verbindung ausgewählt aus unterphosphoriger Säure und deren nichttoxischen wasserlöslichen Salzen und gegebenenfalls mit einem Gehalt bis zu 52 ppm Natriumnitrit hiezu.

2. Verfahren nach Anspruch 1, worin die genannte Verbindung ausgewählt wird aus unterphorphoriger Säure und Natriumhypophosphit.

3. Verfahren nach Anspruch 1 oder 2, dadurch gekennzeichnet, daß 1000 bis 3000 ppm unterphosphorige Säre oder deren nicht-toxischer wasserlöslicher Salze und auch 40 bis 52 ppm Natriumnitrit zu Corned Beef zugesetzt werden.

4. Verfahren nach Anspruch 1, worin das genannte kohlehydrathaltige Nahrungsmittel Honig oder Maissirup ist.

5. Verfahren nach Anspruch 1, worin der genannte Käse natürlicher oder haltbar gemachter Käse ist.

6. Verfahren nach einem der Ansprüche 1, 3, 4 oder 5, dadurch gekennzeichnet, daß die Verbindung ausgewählt wird aus unterphosphoriger Säure, Natriumhypophosphit, Kaliumhypophosphit, Kalziumhypophosphit, Magnesiumhypophosphit und Manganhypophosphit.

## Revendications

1. Méthode pour inhiber la formation d'entérotoxine par *Clostridium botulinum* dans le boeuf de conserve, le fromage et les produits alimentaires à base d'hydrate de carbone, dans lequel le rapport d'hydrate de carbone aux protéines et aux corps gras est supérieur à 1, et pour inhiber après cuisson la formation de nitrosamines à partir de nitrite éventuellement présent dans un tel produit, caractérisée par l'operation d'addition à celui-ci de 300 à 3 000 ppm d'un composé choisi parmi l'acide hypophosphoreux et ses sels solubles dans l'eau non toxiques et contenant éventuellement jusqu'à 52 ppm de nitrite de sodium.

2. Méthode selon la revendication 1 dans laquelle ledit composé est choisi parmi l'acide hypophosphoreux et l'hypophosphite de sodium.

3. Méthode selon la revendication 1 ou 2, caractérisée en ce qu'on ajoute aussi au boeuf en conserve 1 000 à 3 000 ppm d'acide hypophosphoreux ou de ses sels solubles dans l'eau non toxiques et 40 à 52 ppm de nitrite de sodium.

4. Méthode selon la revendication 1 dans laquelle lesdits produits alimentaires à base d'hydrate de carbone sont du miel ou du sirop de glucose.

5. Méthode selon la revendication 1 dans laquelle ledit fromage est du fromage naturel ou industriel.

6. Méthode selon l'une quelconque des revendications 1, 3, 4 ou 5 caractérisé en ce que le composé est choisi parmi l'acide hypophosphoreux, l'hypophosphite de sodium, l'hypophosphite de potassium, l'hypophosphite de calcium, l'hypophosphite de magnésium et l'hypophosphite de manganèse.